# EUROPÄISCHE PATENTSCHRIFT

(11) **EP 0 478 983 B1**
(45) Veröffentlichungstag und Bekanntmachung des Hinweises auf die Patenterteilung: **22.11.1995**
(21) Anmeldenummer: 91115139.7
(22) Anmeldetag: 07.09.1991
(51) Int. Cl.: F16F 7/08, D06F 37/20

(54) **Reibungsdämpfer**
Friction damper
Amortisseur à frottement

(30) Priorität: 29.09.1990 DE 4030869
(43) Veröffentlichungstag der Anmeldung: 08.04.1992
(73) Patentinhaber: SUSPA COMPART Aktiengesellschaft, D-90518 Altdorf (DE)
(72) Erfinder: Stadelmann, Ludwig, W-8503 Altdorf (DE)
(74) Vertreter: Rau, Manfred, Dr. Dipl.-Ing.

(56) Entgegenhaltungen:
- EP-A- 0 362 540
- EP-A- 0 407 793

## Beschreibung

Die Erfindung betrifft einen Reibungsdämpfer, insbesondere für Waschmaschinen mit Schleudergang, bestehend aus einem im wesentlichen kreiszylindrischen Gehäuse und einem koaxial in diesem verschiebbaren, mit einem Ende aus dem Gehäuse herausgeführten und am anderen Ende mit einem etwa zylindrischen Reibungskolben versehenen Stößel, wobei der Reibungskolben mindestens einen etwa kreiszylindrischen Auflage-Abschnitt und diesen radial überragende und axial abstandsunveränderbare, den mindestens einen Auflage-Abschnitt beidseitig in axialer Richtung begrenzende und zueinander axial beabstandete Gegenhalteflansche aufweist, wobei auf dem Auflage-Abschnitt und zwischen den Gegenhalteflanschen ein elastisch gegen die Innenwand des Gehäuses angedrückter Reibungsbelag aus elastisch nachgiebigem Material angeordnet ist, und wobei am Außenumfang des Reibungskolbens eine zur Innenwand des Gehäuses hin offene Schmierfett-Kammer ausgebildet und ausschließlich durch den Reibungskolben begrenzt ist.

Derartige Reibungsdämpfer sind aus der DE-A-36 04 286 bekannt. Diese geschmierten Reibungsdämpfer haben sich in der Praxis in großem Umfang außerordentlich bewährt; sie werden insbesondere in großem Maße in Waschmaschinen eingesetzt. Die Reibungsbeläge bestehen hierbei üblicherweise aus zelligem geschäumten Kunststoff, wobei die Zellen des Kunststoffes mit Fett imprägniert sind. Es hat sich gezeigt, daß bei extremen Belastungen nach längerer Zeit die Reibung von einer geschmierten in eine trockene Reibung übergeht, d.h. der Reibungsdämpfer erwärmt sich sehr stark. Um diese Schwierigkeit zu reduzieren, sind bereits an der Außenseite des Reibungskolbens in Form einer Ringnut ausgebildete Schmierfett-Kammern vorgesehen worden, in denen ein kleiner Vorrat von zusätzlichem Schmierfett vorgesehen ist. Auch diese Maßnahme hat nicht zu einer grundlegenden Beseitigung des Problems geführt.

In der nicht vorveröffentlichten nach Art. 54 (3), (4) und 52 (1) EPÜ zu berücksichtigenden Patentanmeldung EP-A-0 407 793 ist zur Beseitigung dieser Probleme bereits vorgeschlagen worden, eine Schmierfett-Vorratskammer innerhalb des Reibungskolbens auszubilden und über mindestens einen Schmierfett-Kanal mit dem mindestens einen Reibungsbelag zu verbinden. Hierdurch soll eine ständige Nach-Imprägnierung der Reibungsbeläge erfolgen. Das Schmierfett soll durch den oder die Schmierfett-Kanäle in kleinen Mengen zu den Reibungsbelägen und durch diese hindurch zur Reibfläche zwischen Reibungsbelag und Innenwand des Gehäuses wandern. Hierbei ist auch vorgesehen, im Reibbelag eine Öffnung auszubilden, in die ein Schmierfett-Kanal einmündet. Als nachteilig hat sich hierbei herausgestellt, daß im Bereich der Schmierfett-Kanäle der Reibungsbelag nicht abgestützt ist, so daß unterschiedliche Anpreßdrücke zwischen Reibungsbelag und Innenwand des Gehäuses erzeugt werden. Außerdem stellt die erwähnte Öffnung im Reibbelag eine Unterbrechung der Reibungsfläche dar.

Der Erfindung liegt daher die Aufgabe zugrunde, den Reibungsdämpfer der gattungsgemäßen Art so weiterzubilden, daß einerseits ein Abfall der Dämpfung durch Übergang von einer geschmierten in eine trockene Reibung ausgeschlossen wird und daß andererseits die Reibungsverhältnisse selber zwischen Reibungsbelag und Innenwand des Gehäuses nicht gestört werden.

Diese Aufgabe wird erfindungsgemäß dadurch gelöst, daß eine Schmierfett-Vorratskammer innerhalb des Reibungskolbens ausgebildet ist, die über mindestens einen Schmierfett-Kanal mit der Schmierfett-Kammer verbunden ist. Hierdurch wird erreicht, daß das Schmierfett unmittelbar auf die Innenwand des Gehäuses und von dort auch auf die Reibflächen der Reibungsbeläge gelangt. Die Auflagefläche der Reibungsbeläge wird nicht beeinträchtigt. Weiterhin ist auch die Schmierfett-Abgabe an die Innenwand des Gehäuses nicht von der Durchlässigkeit der Reibungsbeläge abhängig.

Besonders vorteilhaft ist es, wenn die Schmierfett-Kammer - in an sich bekannter Weise - zwischen zwei Gegenhalteflanschen ausgebildet ist.

Wenn nach einer vorteilhaften Ausgestaltung der Erfindung die Schmierfett-Vorratskammer durch einen im Reibungskolben befindlichen Einsatzkörper begrenzt wird, dann ist zum einen die Schmierfett-Vorratskammer selber in einfacher Weise zu fertigen und insbesondere in einfacher Weise mit einer Schmierfett-Füllung im Reibungskolben zu montieren. Letzteres ist in besonders einfacher Weise dann möglich, wenn der Einsatzkörper mittels widerhakenartiger, in Ausnehmungen des Stößels eingreifender Verriegelungs-Vorsprünge mit dem Stößel elastisch verriegelt ist.

Um zu verhindern, daß Schmierfett aus der Vorratskammer in den Stößel und von dort nach außen gelangt, ist es von Vorteil, wenn der Einsatzkörper im Bereich seines dem Innenraum des Stößels zugewandten Endes gegenüber der Innenwand des Reibungskolbens abgedichtet ist.

Eine besonders vorteilhafte Ausgestaltung ist darin zu sehen, daß der Einsatzkörper als weitgehend geschlossener, lediglich zu dem mindestens einen Schmierfett-Kanal mit einer Austrittsöffnung hin offener Behälter ausgebildet ist. In diesem Fall kann er gleichsam als weitgehend geschlossene Schmierfettpatrone in den Stößel eingesetzt werden. Um die Förderung des Schmierfettes in die Schmierfett-Kammer hierbei sicherzustellen, ist es von Vorteil, im Einsatzkörper eine das Schmierfett zum Schmierfett-Kanal hin drückende Fördereinrichtung vorzusehen. Diese kann in einer besonders vorteilhaften Ausgestaltung einen im Einsatzkörper verschiebbar geführten, die Schmierfett-Vorratskammer einseitig begrenzenden Kolben aufweisen. Dieser kann als Masse-Kolben ausgebildet sein, der beim Schwingen jeweils entsprechende pulsierende Kräfte auf das Schmierfett ausübt. Alternativ oder kumulativ kann der Kolben aber auch mit einer Druckfeder belastet sein, die konstant eine Kraft auf das Schmierfett ausübt.

Weitere Einzelheiten, Vorteile und Merkmale der Erfindung ergeben sich aus der nachfolgenden Beschreibung zweier Ausführungsbeispiele anhand der Zeichnung. Es zeigt
- Fig. 1: einen Reibungsdämpfer im Längsschnitt,
- Fig. 2: einen Teil-Längsschnitt des Reibungsdämpfers in gegenüber Fig. 1 vergrößertem Maßstab und
- Fig. 3: einen Teil-Längsschnitt durch einen Reibungsdämpfer in einer gegenüber den Fig. 1 und 2 abgewandelten Ausführung.

Der in der Zeichnung dargestellte Reibungsdämpfer weist ein Gehäuse 1 und einen Stößel 2 auf. Das Gehäuse 1 besteht im wesentlichen aus einem zylindrischen metallischen Rohr 3, das an einem Ende mittels eines Bodens 4 verschlossen ist. An der Außenseite des Bodens 4 ist eine Gelenkbüchse 5 zum Anlenken des Reibungsdämpfer angebracht. Diese Gelenkbüchse 5 weist eine als Schwenkachse dienende Symmetrieachse 6 auf, die die Mittel-Längs-Achse 7 des Reibungsdämpfers senkrecht schneidet.

Der Stößel 2 weist an seinem äußeren Ende ebenfalls eine Gelenkbüchse 8 auf, deren Achse 9 ebenfalls die Mittel-Längs-Achse 7 senkrecht schneidet. Der Stößel 2 selber besteht im wesentlichen aus einem sich zur Gelenkbüchse 8 hin verjüngenden Rohr 1o, das auf seiner Außenseite mittels Längsrippen 11 versteift ist. Das Rohr 3 ist mit einer Entlüftungsöffnung 12 versehen. Der Stößel 2 ist einstückig aus Kunststoff gespritzt.

Am im Gehäuse 1 befindlichen inneren Ende des Stößels 2 ist ein Reibungskolben 13 ausgebildet, der ringförmige, im Abstand voneinander ausgebildete und einander paarweise zugeordnete Gegenhalteflansche 14, 15 und 16, 17 aufweist. Zwischen den einander jeweils zugeordneten Gegenhalteflanschen 14, 15 bzw. 16, 17 sind etwa kreiszylindrische Auflage-Abschnitte 18, 19 ausgebildet, die ebenfalls konzentrisch zur Achse 7 angeordnet sind. Auf den Auflage-Abschnitten 18, 19 ist jeweils ein Reibungsbelag 2o, 21 angeordnet. Diese Reibungsbeläge 2o, 21 bestehen aus einem zelligen, elastischen Schaumstoff, beispielsweise einem Polyurethan-Schaumstoff.

Zwischen den beiden einander benachbarten Gegenhalteflanschen 15, 16, also auch zwischen den Reibungsbelägen 2o, 21 ist eine im Verhältnis zum Volumen eines Reibbelages 2o bzw. 21 relativ kleinvolumige ringnutförmige Schmierfett-Kammer 22 ausgebildet.

An der Innenseite des Reibungskolbens 13 ist eine relativ großvolumige Schmierfett-Vorratskammer 23 ausgebildet. Diese wird an ihrer Außenseite durch die Innenwand 24 des Reibungskolbens 13 und an ihrer Innenseite und im Bereich ihrer axialen Enden durch einen Einsatzkörper 25 begrenzt. Dieser Einsatzkörper 25 liegt mit einem Ringbund 26 an der Innenwand 24 eines sich an den Gegenhalteflansch 17 anschließenden Verlängerungsstutzen 27 des Stößels 2 an. Er ist mittels radial nach außen vorspringender widerhakenförmiger Verriegelungs-Vorsprünge 28, die in entsprechende Ausnehmungen 29 in dem Verlängerungsstutzen 27 eingreifen, axial und tangential gegenüber dem Reibungskolben 13 festgelegt.

An seinem anderen, der Gelenkbüchse 8 zugewandten Ende weist der Einsatzkörper 25 einen Zylinderabschnitt 3o auf, in dem eine Ringnut 31 ausgebildet ist. In dieser befindet sich ein O-Ring-Dichtung 32, die gegen die Innenwand 24 des Reibungskolbens 13 anliegt, und zwar im Bereich des Gegenhalteflansches 15, der auf der der Gelenkbüchse 8 zugewandten Seite die Schmierfett-Kammer 22 begrenzt. Die Vorratskammer 23 erstreckt sich also etwa über die axiale Erstreckung des Auflage-Abschnittes 19 einschließlich der zugehörigen Gegenhalteflansche 16,17 und der Schmierfett-Kammer 22.

In dem Bereich des Zylinderabschnittes 3o ist der Einsatzkörper 25 durch eine Stirnwand 33 verschlossen, die einen Abschluß zum Innenraum 2a des Stößels 2 bildet. Der gesamte Einsatzkörper 25 ist einstückig aus einem geeigneten elastischen Kunststoff hergestellt, so daß er mit dem Stößel 2 elastisch verriegelt werden kann.

Im Reibungskolben 13 sind Schmierfett-Kanäle 34 ausgebildet, die von der Vorratskammer 23 in die Schmierfett-Kammer 22 führen, so daß aus der Schmierfett-Vorratskammer 23 Schmierfett 35 in die äußere Schmierfett-Kammer 22 nachgefördert werden kann, und zwar in dem Maße, wie das Schmierfett 35 aus dieser Kammer 22 beim Betrieb des Reibungsdämpfers auf der Innenwand 36 des Gehäuses 1 verbleibt bzw. verbraucht wird. Die Weite d der Schmierfett-Kanäle 34 beträgt etwa 1,o bis 1,5 mm, wobei die Weite d und die Zahl der Kanäle 34 im wesentlichen von der Viskosität des in der Vorratskammer 23 befindlichen Schmierfettes 35 abhängt.

Das Schmierfett 35 wird aus der Kammer 22 auf die Innenwand 36 abgegeben und von dort von den Reibungsbelägen 2o, 21 aufgenommen. Diese bestehen aus Schaumstoff, dessen Zellen zumindest in der an der Innenwand 36 anliegenden Reibfläche geöffnet sind. Besonders geeignet ist hierfür Polyurethan-Schaumstoff.

Der Verlängerungsstutzen 27 erstreckt sich axial um ein Maß a über den endseitigen Gegenhalteflansch 17 des Reibungskolbens 13, das etwas kleiner ist als die axiale Länge b der Reibungsbeläge 2o bzw. 21. Durch diesen Verlängerungsstutzen 27, den zugeordneten Gegenhalteflansch 17 und die Innenwand 36 des Rohres 3 wird eine Schmierfett-Sammelkammer 37 gebildet.

Das Rohr 3 ist an seinem offenen Ende mit einer nach innen gerichteten Sicke 38 versehen, die nach dem Einschieben des Stößels 2 in das Gehäuse 1 angebracht wird, um ein unbeabsichtigtes Ausziehen des Stößels 2 aus dem Gehäuse 1 zu verhindern.

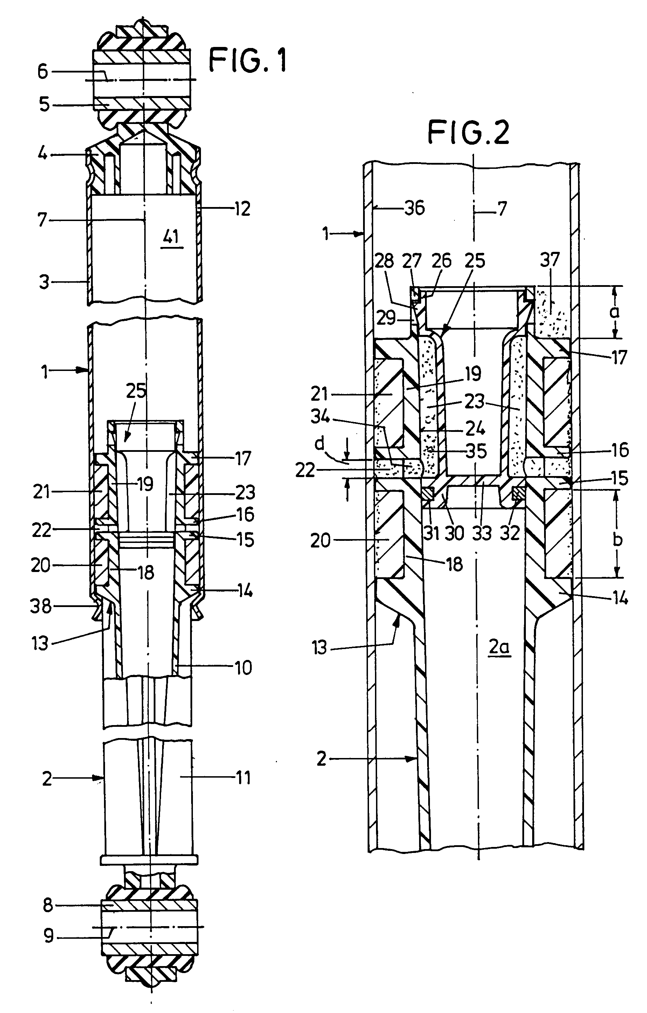

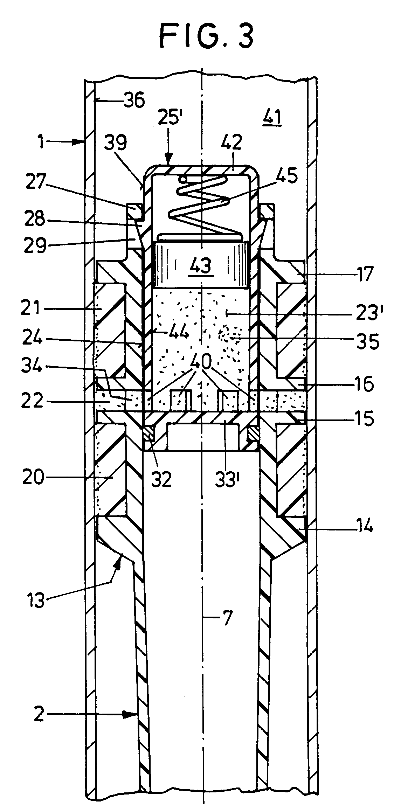

Soweit bei dem Ausführungsbeispiel nach Fig. 3 gleiche Teile verwendet sind, wie bei der Ausführungsform nach Fig. 1 und 2, sind identische Bezugsziffern verwendet worden. Soweit die Teile funktionell gleich aber konstruktiv geringfügig anders sind, sind dieselben Bezugsziffern mit einem hochgesetzten Strich verwendet worden. In solchen Fällen bedarf es nicht einer erneuten Beschreibung.

Bei dem Ausführungsbeispiel nach Fig. 3 ist im Reibungskolben 13 des Stößels 2 ein Einsatzkörper 25' angeordnet, der die Form eines zylindrischen geschlossenen Behälters aufweist. Seine zylindrische Außenwand 39 liegt an der Innenwand 24 an. Die Außenwand 39 trägt die Verriegelungsvorsprünge 28, die in die angepaßten Ausnehmungen 29 im Verlängerungsstutzen 27 eingreifen. Den Schmierfett-Kanälen 34 sind entsprechende Austrittsöffnungen 4o in der zylindrischen Außenwand 39 des Einsatzkörpers 25' zugeordnet. Der Einsatzkörper 25' ist auf seiner dem Innenraum 41 des Gehäuses zugewandten, also der Stirnwand 33' gegenüberliegenden Seite mit einer Stirnwand 42 abgeschlossen, der ein Masse-Kolben 43 benachbart ist, der an der zylindrischen Innenseite der Außenwand 39 des Einsatzkörpers 25' verschiebbar geführt ist. Zwischen diesem Masse-Kolben 43 und der Stirnwand 42 ist eine leicht vorgespannte Schrauben-Druckfeder 45 angeordnet und drückt den Kolben 43 gegen das Schmierfett 35, das sich in der Schmierfett-Vorratskammer 23' befindet, die zwischen dem Kolben 43, der Stirnwand 33' und der Innenseite 44 der zylindrischen Außenwand 39 des Einsatzkörpers 25' ausgebildet ist. In dem Maße, wie Schmierfett 35 über die Innenwand 36 des Gehäuses 1 aus der Schmierfett-Kammer 22 entfernt wird, wird aus der Vorratskammer 23' Schmierfett 35 nachgefördert.

Wenn der Reibungsdämpfer in der Weise eingesetzt wird, daß der Stößel 2 das bewegte Teil ist, das beispielsweise am schwingenden Waschaggregat einer Waschmaschine befestigt wird, dann wird der Masse-Kolben 43 bei jedem Wechselhub einmal in Richtung auf die Schmierfett-Vorratskammer 23' beschleunigt und übt hierdurch eine entsprechende Kraft auf das Schmierfett 35 aus, das die geschilderte Nachförderung zur Schmierfett-Kammer 22 verursacht. Wenn der Masse-Kolben 43 eine entsprechende Masse aufweist, dann kann die Druckfeder 45 überflüssig sein. Wenn dagegen die Beschleunigungen nicht ausreichen oder aber der Stößel in Richtung der Mittel-Längs-Achse 7 unbeweglich montiert wird, also das Gehäuse 1 die entsprechenden Bewegungen ausführt, dann ist die Druckfeder 45 notwendig. In diesem Fall kann die Masse des Kolbens 43 kleinstmöglich sein.

## Patentansprüche

1. Reibungsdämpfer, insbesondere für Waschmaschinen mit Schleudergang, bestehend aus einem im wesentlichen kreiszylindrischen Gehäuse (1) und einem koaxial in diesem verschiebbaren, mit einem Ende aus dem Gehäuse (1) herausgeführten und am anderen Ende mit einem etwa zylindrischen Reibungskolben (13) versehenen Stößel (2), wobei der Reibungskolben (13) mindestens einen etwa kreiszylindrischen Auflage-Abschnitt (18, 19) und diesen radial überragende und axial abstandsunveränderbare, den mindestens einen Auflage-Abschnitt (18, 19) beidseitig in axialer Richtung begrenzende und zueinander axial beabstandete Gegenhalteflansche (14 bis 17) aufweist, wobei auf dem Auflage-Abschnitt (18, 19) und zwischen den Gegenhalteflanschen (14 bis 17) ein elastisch gegen die Innenwand (36) des Gehäuses (1) angedrückter Reibungsbelag (20, 21) aus elastisch nachgiebigem Material angeordnet ist, und wobei am Außenumfang des Reibungskolbens (13) eine zur Innenwand (36) des Gehäuses (1) hin offene Schmierfett-Kammer (22) ausgebildet und ausschließlich durch den Reibungskolben (13) begrenzt ist, dadurch gekennzeichnet, daß eine Schmierfett-Vorratskammer (23, 23') innerhalb des Reibungskolbens (13) ausgebildet ist, die über mindestens einen Schmierfett-Kanal (34) mit der Schmierfett-Kammer (22) verbunden ist.

2. Reibungsdämpfer nach Anspruch 1, dadurch gekennzeichnet, daß die Schmierfett-Kammer (22) zwischen zwei Gegenhalteflanschen (15, 16) ausgebildet ist.

3. Reibungsdämpfer nach Anspruch 2, dadurch gekennzeichnet, daß die Schmierfett-Vorratskammer (23, 23') durch einen im Reibungskolben (13) befindlichen Einsatzkörper (25, 25') begrenzt wird.

4. Reibungsdämpfer nach Anspruch 3, dadurch gekennzeichnet, daß der Einsatzkörper (25, 25') mittels widerhakenartiger, in Ausnehmungen (29) des Stößels (2) eingreifender Verriegelungs-Vorsprünge (28) mit dem Stößel (2) elastisch verriegelt ist.

5. Reibungsdämpfer nach Anspruch 3, dadurch gekennzeichnet, daß der Einsatzkörper (25, 25') im Bereich seines dem Innenraum (2a) des Stößels (2) zugewandten Endes gegenüber der Innenwand (24) des Reibungskolbens (13) abgedichtet ist.

6. Reibungsdämpfer nach einem der Ansprüche 3 bis 5, dadurch gekennzeichnet daß der Einsatzkörper (25') als weitgehend geschlossener, lediglich zu dem mindestens einen Schmierfett-Kanal (34) mit einer Austrittsöffnung (4o) hin offener Behälter ausgebildet ist.

7. Reibungsdämpfer nach einem Anspruch 6, dadurch gekennzeichnet, daß im Einsatzkörper (25') eine das Schmierfett (35) zum Schmierfett-Kanal (34) hin drückende Fördereinrichtung vorgesehen ist.

8. Reibungsdämpfer nach Anspruch 7, dadurch gekennzeichnet, daß die Fördereinrichtung einen im Einsatzkörper (25') verschiebbar geführten, die Schmierfett-Vorratskammer (23') einseitig begrenzenden Kolben (43) aufweist.

9. Reibungsdämpfer nach Anspruch 8, dadurch gekennzeichnet, daß der Kolben als Masse-Kolben (43) ausgebildet ist.

10. Reibungsdämpfer nach Anspruch 8 oder 9, dadurch gekennzeichnet, daß der Kolben (43) mit einer Druckfeder (45) belastet ist.

## Claims

1. A frictional damper, in particular for spinning-cycle washing machines, comprising a substantially circular cylindrical housing (1) and a tappet (2), which is coaxially displaceable in the latter and extends out of it with one end, the other end being provided with an approximately cylindrical friction piston (13), the friction piston (13) having at least one approximately circular cylindrical support segment (18, 19) and bracing flanges (14 to 17) of axially unvarying space and radially extending beyond the latter, which bracing flanges (14 to 17) axially define the at least one support segment (18, 19) on both sides and are axially spaced from each other, a friction coating (20, 21) made of an elastically resilient material being disposed on the support segment (18, 19) and between the bracing flanges (14 to 17) and being elastically pressed against the inner wall (36) of the housing (1), and a grease chamber (22) open towards the inner wall (36) of the housing (1) being formed on the circumference of the friction piston (13) and defined exclusively by the friction piston (13), characterized in that the grease storage chamber (23, 23') is formed within the friction piston (13) and is connected by way of at least one grease channel (34) with the grease chamber (22).

2. A frictional damper according to claim 1, characterized in that the grease chamber (22) is formed between two bracing flanges (15, 16).

3. A frictional damper according to claim 2, characterized in that the grease storage chamber (23, 23') is defined by an insert body (25, 25') located in the friction piston (13).

4. A frictional damper according to claim 3, characterized in that the insert body (25, 25') is elastically interlocked with the tappet (2) by means of a barbed-hook-type interlocking projection (28) engaging with recesses (29) of the tappet (2).

5. A frictional damper according to claim 3, characterized in that the insert body (25, 25') is sealed towards the inner wall (24) of the friction piston (13) in the vicinity of its end facing the interior space (2a) of the tappet (2).

6. A frictional damper according to one of claims 3 to 5, characterized in that the insert body (25') is a largely closed vessel, open merely towards the at least one grease channel (34) by means of an outlet opening (40).

7. A frictional damper according to claim 6, characterized in that a conveyor unit is provided in the insert body (25') pressing the grease (35) towards the grease channel (34).

8. A frictional damper according to claim 7, characterized in that the conveyor unit is provided with a piston (43) defining the grease storage chamber (23') on one side and guided displaceably in the insert body (25').

9. A frictional damper according to claim 8, characterized in that the piston is a mass piston (43).

10. A frictional damper according to claim 8 or 9, characterized in that the piston (43) is loaded by a compression spring (45).

## Revendications

1. Amortisseur à friction, notamment pour des machines à laver à phase d'essorage, constitué d'un carter (1) de forme essentiellement cylindrique circulaire, et d'un poussoir (2) pouvant coulisser coaxialement dans ce carter, sortant hors du carter (1) avec une de ses extrémités, et pourvu, à son autre extrémité, d'un piston de friction (13) sensiblement cylindrique, le piston de friction (13) présentant au moins un tronçon d'appui (18, 19) sensiblement cylindrique circulaire, et des flasques de retenue (14 à 17) espacés axialement les uns des autres, dont l'espacement axial est invariable, qui font saillie radialement du tronçon d'appui, et qui délimitent de part et d'autre en direction axiale ledit au moins un tronçon d'appui (18, 19), une garniture de friction (20, 21) en un matériau élastique souple étant disposée sur le tronçon d'appui (18, 19) et entre les flasques de retenue (14 à 17), en étant appliquée de manière élastique contre la paroi intérieure (36) du carter (1), et une chambre de graisse de lubrification (22) ouverte en direction de la paroi intérieure (36) du carter (1), et exclusivement délimitée par le piston de friction (13), étant formée sur la périphérie extérieure du piston de friction (13), caractérisé en ce qu'à l'intérieur du piston de friction (13) est formée une chambre de réserve de graisse de lubrification (23, 23'), qui est reliée à la chambre de graisse de lubrification (22), par au moins un canal de graisse de lubrification (34).

2. Amortisseur à friction selon la revendication 1, caractérisé en ce que la chambre de graisse de lubrification (22) est formée entre deux flasques de retenue (15, 16).

3. Amortisseur à friction selon la revendication 2, caractérisé en ce que la chambre de réserve de graisse de lubrification (23, 23') est délimitée par un corps d'insert (25, 25') se trouvant dans le piston de friction (13).

4. Amortisseur à friction selon la revendication 3, caractérisé en ce que le corps d'insert (25, 25') est bloqué de manière élastique sur le poussoir (2), au moyen de protubérances de blocage (28) du genre barbe, qui s'engagent dans des évidements (29) du poussoir (2).

5. Amortisseur à friction selon la revendication 3, caractérisé en ce que le corps d'insert (25, 25'), dans la zone de son extrémité dirigée vers l'espace intérieur (2a) du poussoir (2), est rendu étanche par rapport à la paroi intérieure (24) du piston de friction (13).

6. Amortisseur à friction selon l'une des revendications 3 à 5, caractérisé en ce que le corps d'insert (25') est réalisé sous la forme d'un réservoir, dans une large mesure fermé, et uniquement ouvert vers ledit au moins un canal de graisse de lubrification (34), au moyen d'une ouverture de sortie (40).

7. Amortisseur à friction selon la revendication 6, caractérisé en ce que dans le corps d'insert (25') est prévu un dispositif de transport refoulant la graisse de lubrification (35) vers le canal de graisse de lubrification (34).

8. Amortisseur à friction selon la revendication 7, caractérisé en ce que le dispositif de transport comporte un piston (43) guidé de manière coulissante dans le corps d'insert (25') et délimitant la chambre de réserve de graisse de lubrification (23'), d'un côté.

9. Amortisseur à friction selon la revendication 8, caractérisé en ce que le piston (43) se présente sous la forme d'un piston massif.

10. Amortisseur à friction selon la revendication 8 ou 9, caractérisé en ce que le piston (43) est chargé par un ressort de compression (45).
